# EUROPEAN PATENT SPECIFICATION

(11) **EP 0 742 805 B1**
(45) Date of publication and mention of the grant of the patent: **24.03.1999**
(21) Application number: 95902343.3
(22) Date of filing: 10.11.1994
(51) Int. Cl.: C08G 59/68, C09D 163/00, C09D 167/00, C08G 59/42

(54) **POWDER PAINT**
PULVERLACK
PEINTURE PULVERULENTE

(30) Priority: 04.02.1994 NL 9400182
(43) Date of publication of application: 20.11.1996
(73) Proprietor: DSM N.V., 6411 TE Heerlen (NL)
(72) Inventor: STANSSENS, Dirk, Armand, Wim, B-3530 Houthalen (BE); VAN DEN ELSHOUT, Wilhelmus Henricus H. A., NL-6132 SM Sittard (NL); MISEV, Tosko, Alexander, NL-8032 NK Zwolle (NL); GRISNICH, Willem, NL-7412 ED Deventer (NL)
(86) International application number: NL9400282
(87) International publication number: WO9521208

(56) References cited:
- EP-A- 0 051 275
- EP-A- 0 165 207
- EP-A- 0 194 904
- EP-A- 0 600 546
- FR-A- 2 281 951
- GB-A- 1 165 647
- US-A- 4 385 948

## Description

The present invention relates to a powder paint comprising a binder and optionally pigment and additives. The present invention also relates to a two-component system, a powder coating and a substrate coated with the cured powder paint.

Thermosetting powder coatings have better hardness than thermoplastic powder coatings. As one consequence, historically there has been an intense effort to develop crosslinkers and polymers for thermosetting powder coating applications. This effort continues unabated. Indeed, polymers reactable with crosslinkers are still being sought to make binder compositions for thermosetting powder paints that have good flow, good storage stability and good reactivity as is evident from Merck, Powder Paints, Paintindia 47-52 (February 1992). The search is further complicated because the coating ultimately obtained from the powder paint must meet many and varying requirements, depending on the application. Various prior systems are known. Some systems release volatile components during curing. These systems suffer the drawbacks of forming coatings having blisters and/or of releasing undesirable emissions. In the latter regard, the volatile component, being of organic origin, can cause undesirable environmental or health concerns. In addition, it is found that not all desirable powder paint or coating properties are achieved. Other systems use polyesters and conventional crosslinkers containing an epoxy group. In general, in these systems no volatile components are released. However, the use of bisphenol-A epoxy resins in the so-called hybrid systems results in coatings that yellow and chalk relatively strongly on UV exposure, whereas the widely used triglycidyl isocyanurate (TGIC) crosslinker is toxicologically suspect.

The binder composition according to the present invention comprises (i) a polymer capable of reacting with epoxy groups, (ii) a crosslinker containing epoxy groups, wherein the crosslinker comprises at least one C₅-C₂₆ linear or branched aliphatic chain and the crosslinker has an epoxy functionality greater than 1, with the proviso that the epoxy groups are carried on the at least one aliphatic chain and a catalyst being a metal salt of a carboxylic acid or an alcohol or being a metal hydroxide.

EP-A-600546 relates to a binder composition for thermosetting powder paints comprising (i), (ii) and a catalyst.

The curing reaction between the polymer and the crosslinker to form the ultimate cured coating will generally occur in the presence of an effective amount of catalyst. The desired curing time can readily be selected by adjusting the amount of and selection of the catalyst. The importance of the amount of catalyst is elucidated in Misev, Powder Coatings, Chemistry and Technology, pp. 174-223 (John Wiley, 1991) the disclosure of which is incorporated herein by reference.

The choice of the catalyst is of major importance for obtaining a fast curing powder paint, and for the colour characteristics and thermal stability ("overbake resistance") of the powder coating.

The present invention provides a composition comprising a catalyst that is suitable for the specific reaction between the polymer (i) and the crosslinker (ii). The catalyst is a metal salt of a carboxylic acid or an alcohol or is a metal hydroxide.

Generally, both the carboxylic acid and the alcohol contain 1-40 carbon atoms.

Powder paints on the basis of a polymer (i) and crosslinker (ii) are thus obtained with good colour characteristics, good mechanical properties and good overbake resistance. Coatings obtained from these powder paints have a combination of very desirable properties such as flow, storage stability, reactivity, chemical resistance, gloss, scratch resistance, mechanical properties, outdoor durability, colour stability and thermal stability.

Preferably the salts are based on saturated aliphatic mono- and dicarboxylic acids and saturated aromatic carboxylic acids, having 3-25 carbon atoms and more preferably having 6-24 carbon atoms.

In general, the pKₐ of the carboxylic acid is greater than 3 and smaller than 10.

Suitable carboxylic acids include for example saturated aliphatic mono- and dicarboxylic acids, unsaturated aliphatic acids, carbocyclic carboxylic acids, heterocyclic carboxylic acids, hydroxycarboxylic acids, alkoxycarboxylic acids, oxocarboxylic acids, aminocarboxylic acids and amidecarboxylic acids.

Examples of saturated aliphatic monocarboxylic acids include formic acid, acetic acid, propionic acid, butyric acid, isobutyric acid, valeric acid, isovaleric acid, lauric acid, myristic acid, palmitic acid, stearic acid, isononaic acid and hydroxypivalic acid.

Other suitable aliphatic monocarboxylic acids include acids obtainable with the Koch-reaction such as for example 2,2-dimethylpropanoic or pivalic acid (for example Versatic 5™; Shell), 2,2-dimethylbutanoic acid (for example Versatic 6™; Shell), 2,2-dimethylpentanoic acid (for example Versatic 7d™; Shell), 2-ethyl-2-methylbutanoic acid (for example Versatic 7e™; Shell), neononanoic acid (for example Versatic 9™; Shell) and neodecanoic acid (for example Versatic 10™; Shell).

Examples of saturated aliphatic dicarboxylic acids include oxalic acid, malonic acid, succinic acid, glutaric acid, adipic acid, pimelic acid, suberic acid, decanedicarboxylic acid, azelaic acid and sebacic acid.

Examples of unsaturated aliphatic acids include acrylic acid, propiolic acid, methacrylic acid, crotonic acid (trans-isomer), isocrotonic acid (cis-isomer), oleic acid (cis-isomer), linoleic acid, linolenic acid, elaidic acid (trans-isomer), maleic acid, fumaric acid, citraconic acid and mesaconic acid.

Examples of carbocyclic carboxylic acids are camphoric acid, benzoic acid, phthalic acid, isophthalic acid, terephthalic acid, naphthoic acid, toluyl acid, hydratropic acid, atropic acid, cinnamic acid, cyclohexanoic acid and colophonium (derivatives).

Examples of heterocyclic carboxylic acids are furancarboxylic acid, nicotinic acid and isonicotinic acid.

Examples of hydroxy-, alkoxy- and oxocarboxylic acids are glycolic acid, lactic acid, glyceric acid, malic acid, tartaric acid, tropic acid, benzilic acid, salicylic acid, anisic acid, vanillic acid, veratric acid, piperonylic acid, gallic acid, 6-oxohexanoic acid, 5-oxovaleric acid, 3-oxovaleric acid, 3,5-dioxovaleric acid, 2-oxo-1-cyclohexanecarboxylic acid, β-oxocyclohexane-propionic acid, γ-oxo-6-chrysenebutyric acid and β-oxo-3-pyridinepropionic acid.

Preferably, the acids are selected from decanoic acid, octanoic acid, neodecanoic acid, stearic acid, lauric acid, decanedicarboxylic acid, benzoic acid or an acid obtainable with the Koch-reaction.

Suitable alcohols include for example monohydric alcohols, diols and triols such as for example methanol, ethanol, propanol, isopropanol, butanol and isomers thereof, glycol, neopentylglycol, butanediol, hexanediol, cyclohexanedimethylol, glycerol, trimethylolpropane and tris(hydroxyethyl)isocyanurate.

Preferably the metals are lithium, sodium, potassium, caesium, magnesium, calcium, beryllium, tin, copper or zinc.

The most prefered metals are lithium and sodium.

Preferably, sodium or lithium salts of (C₆-C₂₄) carboxylic acids are used.

Very suitable salts for use as a catalyst according to the invention are therefore sodium stearate, lithium stearate, lithium acetate, sodium benzoate, sodium neodecanoate, lithium benzoate, sodium laurate, lithium laurate, lithium adipate, sodium octanoate, lithium octanoate and lithium neodecanoate.

According to another preferred embodiment of the invention, the catalyst is sodium stearate, lithium stearate, sodium neodecanoate or lithium neodecanoate.

As metal hydroxide, sodium hydroxide, potassium hydroxide and caesium hydroxide are preferably used.

With a powder paint composition according to the invention it is possible to achieve a curing cycle of for example 10 minutes, at 200°C. If so desired, 20 minutes curing at 150°C is also possible.

The amount of catalyst suitable for the reaction will be selected so that the desired degree of curing and flow, are obtained in, for example, 20 to 30 minutes at 150°C, or 10 to 15 minutes at 180°C up to 5 to 10 minutes at 200°C.

The quantity of catalyst is generally chosen between 0.1 and 5% by weight and is preferably between 0.4 and 3% by weight relative to the binder.

The invention also relates to a process for preparing a wholly or partially coated substrate by applying a powder coating to a substrate, wherein (a) the polymer capable of reacting with epoxy groups (i), the crosslinker (ii), the catalyst according to the present invention and optionally an amount of additional curing agent are selected so that the curing reaction is substantially complete within 30 min at 200°C, (b) curing the coating by subjecting it to heat for a sufficient time at a suitable temperature to obtain a cured coating (c) wherein the amount of epoxy functional crosslinker (ii) is such that more than 20% of the crosslinking is obtained through that crosslinker.

The polymer may, for example, be a polyester, a polyacrylate, a polyether (such as a polyether based on bisphenol or a phenol-aldehyde novolak), a polyurethane, a polycarbonate, a polybutadiene or a styrene-maleic acid anhydride copolymer.

The molecular weight (Mn) of the polymer is generally higher than 800, but is preferably higher than 1500. The polymer must flow well at temperatures between 100°C and 200°C and therefore has a molecular weight (Mn) below about 10,000, and preferably below about 7,000.

The polymer generally has a viscosity measured at 158°C lower than 8,000 dPas. The viscosity will generally be greater than 100 dPas. It is of advantage for the viscosity to range from about 300 to about 5,000 dPas. The viscosity as used here is measured by the Emila method, which is described by Misev in Powder Coatings; Chemistry and Technology, pp. 287-288 (1991). The temperature (158°C) is the temperature actually measured in the sample.

The Tg of the polymer is typically greater than about 20°C, preferably greater than 30°C, and can be greater than 40°C, although, in particular, it is preferably greater than 60°C. The Tg of the polymer is usually lower than 120°C, otherwise preparation of the binder composition can become somewhat difficult. The Tg of the polymer can, as indicated hereinabove, be selected based on the target Tg for the binder composition.

If polymers are used that have only terminal groups reactive with an epoxy functionality, the polymer has an average functionality (reactable with epoxy groups) of higher than about 1.6 and preferably higher than 2. The polymer in general has an average functionality less than 5, preferably less than about 3. If polymers are used - such as polyacrylates - with pendant functional groups, the average functionality will be higher than about 1.6, and preferably higher than 2. Such a polymer in general has an average functionality less than 8, preferably less than 4.

The polymer contains functional groups that are reactable with epoxy groups. Such a polymer typically has a quantity of functional groups below about 2.7 meq/gram of resin (polymer). The quantity preferably is lower than 1.25 meq/gram of resin, and, in particular, it is preferably lower than about 0.90 meq/gram. The quantity of functional groups is generally greater than about 0.09 meq/gram polymer, but preferably higher than 0.18 meq/gram polymer.

The acid or hydroxyl number of polymers with respectively acid or hydroxyl functional groups can be calculated by multiplying the quantity given in meq/g by 56.1 (the molecular weight of KOH). Hence, a polymer with carboxyl reactive groups typically has an acid number below 150 mg KOH/gram of resin (polymer). The acid number preferably will be lower than 70 and, in particular is lower than 50. The acid number is generally greater than 5, but preferably higher than 10.

The equivalent ratio between the reactive groups in the polymer to epoxy groups (e.g. carboxyl groups in the polymer and epoxy groups in crosslinker) is usually between 1.6:1 and 0.5:1, and is preferably between 1:1 and 0.8:1. This ratio may be lower if the epoxy-functional crosslinker according to the invention is used in combination with other crosslinkers.

The polymer with the capability to react with epoxy groups is preferably acid-functional.

The preferred polymers are polyesters and polyacrylates.

Polyesters useful as the polymer reactable with epoxy groups are generally based on the residues of aliphatic polyalcohols and polycarboxylic acids.

The polycarboxylic acids generally are selected from the group consisting of aromatic and cycloaliphatic polycarboxylic acids because these acids tend to have a Tg increasing effect on the polyester. In particular two-basic acids are used. Examplary polycarboxylic acids are isophthalic acid, terephthalic acid, hexahydro terephthalic acid, 2,6-naphthalene dicarboxylic acid and 4,4-oxybisbenzoic acid and, in so far as available, their anhydrides, acid chlorides or lower alkyl esters such as e.g. the dimethylester of naphthalene dicarboxylic acid. Although not required, the carboxylic acid component usually comprises at least about 50 mol%, preferably at least about 70 mol%, isophthalic acid and/or terephthalic acid.

Other suitable aromatic cycloaliphatic and/or acyclic polycarboxylic acids useful herein include, for example, 3,6-dichloro phthalic acid, tetrachloro phthalic acid, tetrahydro phthalic acid, hexahydro terephthalic acid, hexachloro endomethylene tetrahydro phthalic acid, phthalic acid, azelaic acid, sebacic acid, decane dicarboxylic acid, adipic acid, succinic acid, trimellitic acid and maleic acid. These other carboxylic acids can be used in amounts of up to at most 50 mol% of the total amount of carboxylic acids. These acids may be used as such, or, in so far as available at their anhydrides, acid chlorides or lower alkyl esters.

Hydroxy carboxylic acids and/or optionally lactones can also be used, such as, for example, 12-hydroxy stearic acid, hydroxy pivalic acid and E-caprolactone. Monocarboxylic acids, such as, for example, benzoic acid, tert.-butyl benzoic acid, hexahydro benzoic acid and saturated aliphatic monocarboxylic acids, can, if desired, be used in minor amounts.

Useful polyalcohols, in particular diols, reactable with the carboxylic acids to obtain the polyester include aliphatic diols such as, for example, ethylene glycol, propane-1,2-diol, propane-1,3-diol, butane-1,2-diol, butane-1,4-diol, butane-1,3-diol, 2,2-dimethylpropanediol-1,3 (= neopentyl glycol), hexane-2,5-diol, hexane-1,6-diol, 2,2-bis-(4-hydroxy-cyclohexyl)-propane (hydrogenated bisphenol-A), 1,4-dimethylolcyclohexane, diethylene glycol, dipropylene glycol and 2,2-bis[4-(2-hydroxy ethoxy)-phenyl] propane, the hydroxy pivalic ester of neopentyl glycol.

Small amounts, such as less than about 4 wt.% but preferably less than 2 wt.%, of trifunctional alcohols or acids may be used in order to obtain branched polyesters. Examples of usefull polyols and polyacids are glycerol, hexanetriol, trimethylol ethane, trimethylol propane, tris-(2-hydroxyethyl)-isocyanurate and trimellitic acid.

Tetrafunctional monomers generally are not preferred, because these may cause too much branching and gelling, although minute quantities can be used. Examples of useful polyfunctional alcohols and acids are sorbitol, pentaerithritol and pyromellitic acid. However, in order to synthesise branched polyesters, trifunctional monomers are preferred.

Coating properties can e.g. be influenced by diol selection. For instance, if good weather resistance is desired, the alcohol component preferably contains at least 70 mol% neopentyl glycol, 1,4-dimethylolhexane and/or hydrogenated bisphenol-A. Caprolactone and hydroxypivalic acid are also useful if good weather resistance is desired.

Compounds that are suitable for reaction with polycarboxylic acids to yield the desired polyesters are also monoepoxides such as, for example, ethylene oxide, propylene oxide, monocarboxylic acid glycidyl ester (for example Cardura E10™; Shell) or phenyl glycidyl ether.

The polyester preferably contains 5 wt.% to 30 wt.% of aliphatic acids and/or aliphatic alcohols. Examples of these compounds are adipic acid, cyclohexane dicarboxylic acid, succinic acid, cyclohexane dimethanol and hydrogenated bisphenol-A. The use of these monomers may improve the mechanical properties of the binder, a powder paint composition comprising said binder, or any powder coating prepared from the powder paint composition.

The polyesters are prepared according to conventional procedures by esterification or transesterification, optionally in the presence of customary esterification catalysts such as, for instance, dibutyltin oxide or tetrabutyl titanate. Preparation conditions and the COOH/OH ratio can be selected so as to obtain end products that have an acid number and/or a hydroxyl number within the targeted range of values.

A carboxylic acid functional polyester is preferably prepared in a series of steps. In the last step of which an aromatic or, preferably, aliphatic acid is esterified so as to obtain an acid-functional polyester. As known to those skilled in the art, in an initial step terephthalic acid is allowed to react in the presence of an excess of diol. Such reactions produce a mainly hydroxyl functional polyester. In a second or subsequent step, an acid functional polyester is obtained by allowing further acid to react with the product of the first step. A further acid includes, among others, isophthalic acid, adipic acid, succinic anhydride, 1,4-cyclohexane dicarboxylic acid and trimellitic anhydride. If trimellitic anhydride is used at a temperature of 170-200°C, a polyester with a relatively high number of trimellitic acid end groups is obtained.

The polyester can be a crystalline polyester, although amorphous polyesters are preferred. Mixtures of crystalline and amorphous polyesters can be used. Amorphous polyesters have a viscosity generally within a range of between 100 and 8000 dPas (measured at 158°C, Emila). Crystalline polyesters usually have a lower viscosity in the range of about 2 to about 200 dPas.

If the polyester contains carboxylic acid reactive groups, the acid number of the polyester is selected so that the desired amount of crosslinker can be used. The acid number preferably is higher than 10, and preferably higher than 15. The acid number is preferably lower than 50 and in a very preferred embodiment of the invention lower than 35.

Hydroxyl functional polyesters can be prepared in a manner known per se by the use of a sufficient excess of glycol (polyalcohol) in the polyester synthesis.

Epoxy functional polyesters can be prepared in a manner known per se such as, for example by reacting an acid polyester with an equivalent of diglycidyl terephthalate or epichlorohydrin per acid group. Suitable polyesters of this type are described in US-A-3576903.

Phosphoric acid functional polyesters can be obtained by (trans)esterification of phosphoric acid (esters) with a hydroxy functional polyester. Another method for making phosphoric acid functional polyesters involves allowing P₂O₅ to react with a hydroxyl functional polyester.

Suitable polyesters for use in powder coating preparation are for example described in U.S. Patent No. 4,147,737 and U.S. Patent No. 4,463,140, the disclosures of which are incorporated herein by reference.

The Tg of the polyester is selected to maintain the Tg of the polyester-crosslinker mixture high enough (preferably > 30°C) so that any powder paints or binders prepared therefrom are physically stable at room temperature. Polyester and crosslinker combinations with a lower Tg can, if desired, be employed in preparing a powder coating composition. However, to maintain powder stability such powders are kept under cooled conditions. The Tg of the polyester can be greater than 45°C, but preferably is greater than 60°C. The Tg is generally lower than 90°C.

Polyacrylates useful herein as the polymer reactable with epoxy groups can be based on (meth)acrylic acid, methyl (meth)acrylate, ethyl (meth)acrylate, butyl (meth)acrylate, propyl (meth)acrylate, 2-ethylhexyl (meth)acrylate, cyclohexyl (meth)acrylate, decyl (meth)acrylate, isodecyl (meth)acrylate, benzyl (meth)acrylate and hydroxyalkyl (meth)acrylates such as hydroxyethyl (meth)acrylate and hydroxypropyl (meth)acrylate and/or glycidyl esters or glycidyl ethers of alkyl (meth)acrylates. The polyacrylates can be obtained by known methods. In these methods, comonomers such as, for example, styrene, maleic acid/anhydride, as well as small amounts of ethylene, propylene and acrylonitrile, can be used. Other vinyl or alkyl monomers, such as, for example, octene, triallyl isocyanurate and diallyl phthalate can be added in small amounts.

A polyacrylate containing acid groups is usually obtained by copolymerization of the desired amount of acid, such as, for example, (meth)acrylic acid, maleic acid or fumaric acid.

The Tg of the polyacrylate is generally between about 30°C and about 120°C. Relatively greater amounts of crosslinker can be used in the binder composition when the Tg is at the higher end of the range. For optimum storage stability the Tg is preferably higher than 50°C. For polymer processing reasons the Tg is preferably lower than 100°C.

In general the viscosity of the polyacrylate is between 100 and 8000 dPas (measured at 158°C; Emila).

The present epoxy-functional crosslinker comprises at least one C₅ to C₂₆ aliphatic chain provided that the epoxy functionality is carried on the aliphatic chain. The aliphatic chains can be linear or branched. The aliphatic chains carrying the epoxy functionality are preferably linear. The epoxy functional crosslinker can also comprise several aliphatic chains at least one of which carries epoxy functionality wherein the chains are linked via ester, amide, urethane or ether groups. As evident, it is not required that each chain carries an epoxy group. The epoxy functionality is, of course, greater than 1.

Preferably, the aliphatic chain contains 6 or more and in particular 12 or more carbon atoms. Preferably the aliphatic chain contains 22 or less carbon atoms.

The oxirane oxygen content of the crosslinker in general is higher than 1 wt.%, preferably higher than 2 wt.%. In general the oxirane oxygen content of the crosslinker will be lower than 20 wt.%, in practice mostly lower than 15 wt.%.

The crosslinker preferably comprises an aliphatic ester carrying an epoxy group. When the crosslinker comprises aliphatic esters, the C₅ to C₂₆ aliphatic chains of the crosslinker are linked via ester groups. Exemplary esters include the methyl ester of linoleic acid, the tert.-butyl ester of linolenic acid, and epoxidized oil.

A crosslinker comprising aliphatic chains carrying an epoxy group can be obtained by epoxidation of unsaturated aliphatic compounds. Illustrative of the suitable unsaturated aliphatic compounds are ethylenically unsaturated acids, ethylenically unsaturated alcohols and ethylenically unsaturated amines. In general, ethylenic unsaturation is not present on the α,β position with respect to a heteroatom in the unsaturated aliphatic compound. It is further preferred, that the epoxy group is not present on the **β,**γ position with respect to a hetero atom, in case the hetero atom is bound with the carbon atom via a double bond. It is further preferred that the ethylenic unsaturations are not mutually conjugated when the aliphatic chain has multiple unsaturations. In general, more than 2, preferably 3, saturated carbon atoms are present between the heteroatom and the unsaturation. Examples of suitable ethylenically unsaturated aliphatic compounds are 3-methyl-3-pentene-1-ol, 4-pentenoic acid, 3-pentenol, 5-hexenoic acid, 3-hexenol, 7-decenol, 6-dodecenoic acid or hydroxy terpenes. Hydroxy terpenes are described in Newman, Chemistry of Turpenes and Turpenoids (1972) pages 18-19. Representative terpenes are, among others, acyclic hydroxy terpenes such as myrcene-8-ol, dihydrolinalol, myrcene-2-ol, linalol, nerol, geraniol, alpha-geranol, and alpha-nerol. Furthermore, unsaturated fatty acids and fatty alcohols are also suitable, and representative fatty acids comprise lauroleic acid, myristoleic acid, palmitoleic acid, oleic acid, linoleic acid, linolenic acid, ricinoleic acid, gadoleic acid, and erucic acid, as well as unsaturated fatty acids (C₂₀ and C₂₂ having multiple unsaturations) from herring or sardine oil. It being understood that fatty amine and fatty alcohol counterparts of fatty acids are contemplated, although an acid will be easier to obtain, and for this reason that class is preferred.

Preferably the epoxy group is not a terminal grcup. The epoxy groups in the crosslinker mainly comprise internal epoxy groups as shown in formula (I)

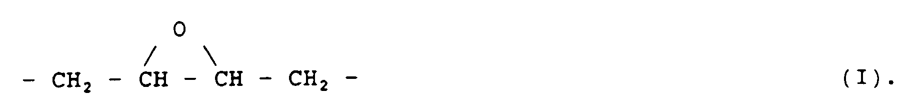

Although not required, the crosslinker usually contains more than one aliphatic chain, and can contain several chains, carrying an epoxy group. Unsaturated fatty acids with multiple unsaturations that are poly-epoxidized can for example also be used as alkyl ester, the alkyl being, for example, methyl, ethyl, propyl, cyclohexyl or 2-ethylhexyl.

The average functionality of the crosslinker is usually higher than 1.2, preferably higher than 1.7, in particular higher than 2.1. In general the average functionality is lower than 8.

Examples of suitable crosslinkers are epoxidized unsaturated oils of vegetable, animal or marine origin, or corresponding epoxidized unsaturated fatty acids that are wholly or partly esterified with polyalcohols. The crosslinkers can comprise, for example, an epoxidized oil, and/or natural oils that contain epoxy groups. In fatty chains of natural origin the ethylenic unsaturation is generally seven -CH₂- groups removed from a carbonyl group. The remaining double bonds of optionally partly epoxidized fatty acids can be removed by, for example, hydrogenation and/or further epoxidation.

A fatty chain means the aliphatic chain of an equivalent fatty acid, fatty alcohol or fatty amine.

Examples of suitable crosslinkers are epoxidized oils wherein the oil is linseed oil, soybean oil, safflower oil, oiticica oil, caraway seed oil, rapeseed oil, castor oil, dehydrated castor oil, cotton seed oil, wood oil, vernonia oil (a natural oil), sunflower oil, peanut oil, olive oil, soybean leaf oil, maize oil, fish oil such as, for example, herring or sardine oil, and non-cyclic terpene oils. The epoxidized oil is preferably epoxidized soybean oil and/or epoxidized linseed oil.

Vegetable oils and epoxidation thereof are described in Surface Coatings, Vol. I:20-38 (1983), the disclosure of which is incorporated herein by reference.

Epoxidized compounds include diesters, triesters and oligo-esters of polyalcohols such as glycerol, trimethylol propane, pentaerythritol, dipentaerythritol and unsaturated fatty acids. Tall oil fatty acid as well as the fatty acids of the above-mentioned unsaturated oils can be used as the fatty acid.

There may be advantage in using transesterified fatty acids consisting of fatty acids of said oils with a monoalcohol, if a crosslinking agent having a relatively low functionality is required. Monoalcohols are typified by ethanol, t-butanol, and hexanol.

A suitable crosslinker can also be comprised, for example, of alcohols that carry an epoxy group which have been esterified with carboxylic acids containing one or more carboxyl groups. Illustrative of such other suitable crosslinkers are the triester of trimellitic acid and 3,4-epoxy hexanol or of epoxidized unsaturated fatty alcohol. As unsaturated fatty alcohols, the alcohol equivalent to a fatty acid can be used.

Additional crosslinkers comprise epoxidized fatty borates. These crosslinkers can be obtained by allowing fatty alcohols to react with H₃BO₃ or BH₃, and then epoxidizing the reaction product in a conventional manner.

Still other suitable crosslinkers can be prepared by esterifying unsaturated fatty alcohols with phosphoric acid. This can be effected by allowing a fatty alcohol to react with P₂O₅. Another method involves a transesterification of the fatty alcohol with trimethyl phosphate. Aliphatic phosphite functional crosslinkers can be obtained in an analogous manner. For instance, aliphatic phosphite functional crosslinkers can be obtained by allowing phosphoric acid to react with a fatty alcohol. The unsaturations in the fatty chains can subsequently be epoxidized in a known manner. These crosslinkers containing phosphorus have a positive effect on the colour of the coating. The positive effect includes reduction of, if not prevention of, discolouration during the curing reaction and/or with overbake.

Yet other suitable crosslinkers can be prepared, for example, by reacting fatty acids or fatty amines with polyglycidyl compounds such as, for example, triglycidyl isocyanurate, Epikote 1001^{R} or diglycidyl terephthalate, and subsequently epoxidizing the ethylenically unsaturated bonds in the customary manner.

Further suitable crosslinkers can be obtained by transesterification of fatty alcohols with dimethyl carbonate, or by reaction of phosgene with fatty alcohols to obtain fatty carbonates. The fatty carbonates are then epoxidized in the customary manner.

Suitable crosslinkers also include, for example, thioesters of epoxidized fatty acids and polythiols.

Other examples of crosslinkers include fatty amides, fatty urethanes or fatty urea derivatives containing epoxy groups. These crosslinkers are advantageous because binder compositions incorporating them have a higher Tg than when comparable amounts of epoxidized oils are used. The presence of amide bonds enhances the Tg, and the higher Tg means improved storage stability.

Fatty amides can simply be prepared by reacting unsaturated fatty acids with di-, tri- or polyamines. Examples of suitable amines are 1,6-hexane diamine, 1,4-cyclohexane dimethyl amine, isophorondiamine, 1,4-diaminobutane, and 1,5-diamino-2-ethyl-amino pentane, among others. The unsaturated fatty amides can then be epoxidized in the customary manner. Another method for making suitable fatty amides comprises reacting fatty amines with polyacids such as, for example, terephthalic acid, isophthalic acid, trimellitic acid or 1,4-cyclohexane dicarboxylic acid. The unsaturated fatty amides are then subsequently epoxidized in the customary manner. Yet another method of preparing epoxidized fatty amides is by direct amidation of epoxidized oils. This can be achieved by the reaction of polyamines with epoxidized oil as described in J. Am. Oil Chemists Soc. 70 no. 5 (1993), pp. 457-460, hereby incorporated by reference.

Fatty urethanes can be prepared by reacting unsaturated fatty alcohols with di-, tri- or polyisocyanates and subsequently epoxidizing the unsaturated fatty chains.

Fatty urea compounds can be prepared by reacting unsaturated fatty amines with di-, tri- or polyisocyanates and subsequently epoxidizing the fatty chains. A number of polyisocyanates can be used. Among those hexamethylene diisocyanate or its trimer, isophorone diisocyanate (IPDI) or its trimer, dicyclohexane methane diisocyanate and tetramethyl xylene diisocyanate (TMXDI) are quite suitable.

Modified epoxidized oils or epoxidized alkyd resins can also be used as a crosslinker.

The oils can be modified with, for example, mono- and/or polyfunctional epoxy-reactive compounds. Examples of such epoxy-reactive compounds are compounds containing carboxylic acid groups, compounds containing anhydride groups, compounds containing amine groups, or bisphenols. These epoxy-reactive compounds are exemplified by phthalic acid, isophthalic acid, para-tertiary butyl benzoic acid, terephthalic acid, benzoic acid and adipic acid, phthalic anhydride, hexahydro phthalic anhydride, tetrahydro phthalic anhydride, succinic anhydride, combinations of such anhydrides, diamino butane and diamino hexane and bisphenol-A.

Another suitable modification involves the urethanization of an oil containing, for example, a hydroxyl group, such as castor oil, with mono- and diisocyanates, after which the oligomeric oil-urethanes are epoxidized in the customary manner.

Other suitable modified crosslinkers are, for example, epoxidized urethanized oils.

Suitable products are preferably obtained by one-stage or two-stage transesterification of epoxidized oils with mixtures of polyalcohols and di- or polyalkyl esters of di- or polycarboxylic acids. For example, first the methyl ester of 4-hexenoic acid can be epoxidized, after which the resulting epoxidized oil is transesterified with an equimolar amount of trimethylol propane, methanol being distilled off. Subsequently, the trimethylol propane ester of 4,5-epoxyhexanoic acid can be esterified further with dimethyl terephthalic acid, methanol being distilled off. The result is an epoxidized alkyd resin. In an analogous manner an epoxidized oil can be transesterified with, for example, pentaerythritol and simultaneously or subsequently with dimethyl adipate.

Mixtures of the crosslinkers described hereinabove can be used, and can be combined at pre-selected ratios. The pre-selected ratio will depend on the desired application.

In order to function as a crosslinker herein, the epoxy-functional crosslinker, as such, reacts during curing to at least a substantial extent. Generally, the reaction should be such that mechanical and/or chemical resistance properties of the cured coating are obtained through the curing reaction of the epoxy-functional crosslinker and the polymer reactable therewith.

Depending on the desired end-use application, crosslinkers described hereinabove can also be used in combination with still other crosslinkers known in the preparation of powder paint composition.

The catalyst according to the invention and optionally also additives can be added either to the polymer or to the crosslinker.

The catalyst can also be added by means of extrusion technologies during preparation of the powder paint, optionally together with the pigments and the fillers.

The catalyst and any other additives can also be applied as a masterbatch. Such a masterbatch can be a mixture of the epoxy group-reactive polymer that is also used for the binder composition or another - non-reactive - resin with the catalyst and, if so desired, the total quantity or a portion of the additives. Generally, the quantity of catalyst in the masterbatch is between 10 and 40% by weight (relative to the polymer and catalyst).

According to a preferred embodiment of the invention the masterbatch is prepared by adding a total of between 10 and 40% by weight of for example a mixture the metal and the acid to the epoxy group reactive polymer, having a temperature high enough to stir the polymer properly, preferably some degrees below the boiling point of the acid, but never above 300°C. This mixture is stirred for at least 1 hour under water discharge conditions. Preferably the metal and the acid have a substantially equimolar ratio.

Subsequently, the various components can be mixed using an extruder or kneader at temperatures between, for example, about 70°C and about 150°C. In general, the mixing is conducted at temperatures above the melting point or within or above the melting range of the binder. Depending on the temperature used and the catalyst used, it may be necessary to conduct the mixing and cooling rapidly.

In a preferred embodiment of the invention, a two-component (or two-package) system for the preparation of a powder paint comprises a first component consisting essentially of all or a large part of the polymer (i) and the crosslinker (ii), and a second component consisting essentially of a polymer (i) or another polymer and the catalyst for the curing reaction between the polymer (i) and the crosslinker (ii) (masterbatch).

The preparation of powder paints and the chemical curing reactions of these powder paints to obtain cured coatings are generally described in, for example, Misev, Powder Coatings, Chemistry and Technology, pp. 44-54, p. 148 and pp. 225-226, the disclosure of which is incorporated herein by reference.

The invention also relates to a method for preparing a powder paint consisting in mixing the polymer (i), the crosslinker (ii) and the catalyst to form a homogeneous mixture at a temperature higher than 70°C, after which the mixture is cooled.

The binder composition can be effectively prepared by various methods. A very suitable method is to mix the polymer and the crosslinker for a short time at elevated temperature in a static mixer or dynamic mixer. Elevated temperatures can be above 150°C and a short time can, for example, be a number of seconds, for example 20 seconds. Preference is given to the static mixer because materials with a low viscosity, such as unmodified epoxidized oils, can thus be readily mixed with the polymer. The mixed product is then cooled, crushed and reduced to the desired particle size (by milling, for example) for obtaining powder particles that are sufficiently chemically homogeneous.

Preferably a static mixer is used. A static mixer requires little maintenance and is hardly subject to wear and a static mixer can handle much material in a short time. Very suitable static mixers include for example a Kenics type mixer, a Sulzer mixer (SMX, SMXL or a SMR) and static mixers of Toray, Erestat, Wymbs Eng. Ltd., Premixer Quarto, Premixer, Ross ISG, Komax, Lightnin, Prematechnik and Bran und Lübbe. A Sulzer SMR-type mixer can be heated or cooled easily if needed.

Kenics type static mixers are described in US Patent No. 3,286,992, US Patent No. 3,664,638 and US Patent No. 3,704,006, the disclosures of which are incorporated herein by reference. Other mixers are described in US Patent No. 3,404,869, the disclosure of which is incorporated herein by reference.

Suitable dynamic mixers include for example a rotor/stator type mixer and a colloid mill. A rotor/stator mixer is used for the production of oil-in-water emulsions. An advantage of such mixing equipment is that it is simple to clean and thus easy to maintain.

As a general proposition, the grinding yields particle sizes on the order of 0.5 mm to about 15 mm. The particle sizes can fall in the range of 1 mm to 12 mm, and can average about 5 to 6mm. Usually about 80 % of the particles are larger than 1 mm, although it will be appreciated that the size is not critical.

A powder paint composition can then be prepared by mixing the binder composition with a catalyst and, optionally, a pigment, customary fillers and other additives and optionally additional curing agents at a temperature above the melting point of the binder composition.

Instead of using the binder system as a single component, the various ingredients of the binder composition can also be mixed with the other ingredients of the powder paint during the preparation of the paint. In this embodiment the crosslinker - which is generally liquid at 20-40°C - can be added by means of a metering pump to an extruder as the polymer resin is being extruded. Mixing in general takes place above the melting point (or range) of the polymer. The crosslinker can also be incorporated in pigment or filler and subsequently added to the resin (polymer capable of reacting with epoxy groups) and mixed such as in an extruder.

Of course all customary additives can, if desired, be used in the powder coating systems according to the invention, such as, for example, pigments, fillers, deaerating agents, flow-promoting agents and stabilizers. Pigments include inorganic pigments, such as titanium dioxide, zinc sulphide, iron oxide and chromium oxide, as well as organic pigments such as azo compounds. Fillers comprise metal oxides, silicates, carbonates and sulphates.

As additives, stabilisers such as primary and/or secondary antioxidants and UV stabilizers such as, for example, quinones, (sterically hindered) phenolic compounds, phosphonites, phosphites, thioethers and HALS compounds (Hindered Amine Light Stabilizers) can be used. In order to obtain powder coatings that have good stability during cure, the primary antioxidants appear important. Therefore, the powder paint preferably includes an effective amount of stabilizer, which in general is an amount of 0.1-2 wt.% with respect to the binder composition. Stabilizers are well known, and several of the useful ones are shown in the examples.

Deaerating agents are exemplified by benzoin and cyclohexane dimethanol bisbenzoate. Flow-promoting agents include, among others, polyalkyl acrylates, fluorohydrocarbons and silicon oils. Other additives include those which are used to improve tribo charging, such as, for example, sterically hindered tertiary amines.

Powder paints according to the invention can be applied in the customary manner, for example by electrostatic spraying of the powder onto an earthed substrate, and curing the coating by subjecting it to heat for a sufficient time at a suitable temperature. The applied powder can be heated in, for example, a gas furnace, an electric furnace or by means of infrared radiation.

Industrial thermosetting coatings from powder paint (coating) compositions are further generally described in Misev, Powder Coatings, Chemistry and Technology pp. 141-173 (1991), the disclosure of which is incorporated herein by reference.

Compositions according to the present invention can be used in powder coatings for use on metal, wood and plastic substrates. Examples are general-purpose industrial coatings, coatings for machinery and for example for cans, domestic and other small equipment. Furthermore, the coatings are quite suitable in the automotive industry, to coat exterior and/or interior parts of vehicles such as cars.

EP-A-51275 discloses a solvent-based system comprising aliphatic and/or cycloaliphatic epoxide compounds, polycarboxylic acid units and an alkali and/or alkaline earth salt catalyst component. EP-A-51275 teaches a very specific crosslinker and is not directed to powder coatings. The obtained coatings are applied in auto repair applications.

EP-A-600546 discloses a powder paint comprising a binder composition comprising (i) a polymer capable of reacting with epoxy groups and being selected from the group consisting of a polyester, a polyacrylate, a polyether, a polyurethane, a polycarbonate, a polybutadiene or a styrene-maleic acid anhydride copolymer and (ii) a crosslinker containing epoxy groups, wherein the crosslinker comprises at least one C₅-C₂₆ linear or branched aliphatic chain and the crosslinker has an epoxy functionality greater than 1, with the proviso that the epoxy groups are carried on the at least one aliphatic chain and a catalyst.

Suitable catalysts are lithium alkanolates such as lithium butanolate, lithium triazole, lithium imidazole and lithium hydroxide.

The invention will be further described based on the following non-limiting examples.

### Example I

### Preparation of polyester 1 and powder paint I

A 3-litre reactor vessel fitted with a thermometer, a stirrer and a distillation unit was filled with 0.35 mol trimethylolpropane, 18.5 mol terephthalic acid, 18.8 mol neopentylglycol, 0.05% w/w dibutyl tin oxide and 0.05% w/w tris-nonylphenylphosphite.

Next, with a light flow of nitrogen being passed over the reaction mixture, which was continuously stirred, the temperature was raised to 170°C, with water being formed. The temperature was gradually raised further to a maximum of 245°C and the water distilled off. The reaction was continued until the acid value of the polyester was less than 12 mg of KOH/g.

Next, in a second step, isophthalic acid (2.35 mol) was added to the reaction vessel and further esterification occurred and a polymer with an acid value of 25.7 was obtained. The latter part of the second step was carried out under reduced pressure.

The resin obtained ("polyester resin 1") had the following characteristics:
- acid value: 28 mg of KOH/g;
- functionality: 2.3;
- viscosity: 1500 dPas (Emila 158°C);
- Tg: 69°C.

The theoretical -COOH functionality is given as the functionality, based on the quantity of trifunctional monomer and the theoretical molecular weight.

Using a laboratory extruder (PRISM) at 130°C, this resin (168.5 parts w/w) was processed to a powder paint with 16.5 parts w/w epoxidized linseed oil (LANKROFLEX®, Harcros, epoxy-equivalent weight 180), 15 parts w/w of a masterbatch of 20% lithium benzoate in a polyester resin (Uralac P 3400 from DSM Resins), 100 parts w/w titanium oxide (KRONOS 2160™), 3 parts w/w flow agent (Resiflow PU 5™), 1.5 parts w/w benzoin (degassing agent), 1.0 part w/w antioxidant (Santowhite™) and 0.1 part w/w optical white (Uvitex™).

### Example II

### Preparation of polyester 2 and powder paint II

Preparation of the powder paint according to Example I was repeated, with 128.5 parts w/w of "polyester resin 1" being used instead of 168.5 parts w/w of the obtained resin.

This first resin was combined with 40 parts w/w of a second polyester resin that was prepared according to the polyester preparation procedure of Example I, using 14.9 mol terephthalic acid, 12.1 mol neopentylglycol, 3.75 mol 1,4-cyclohexanedimethanol and 2.6 mol 1,4-cyclohexanedicarboxylic acid. The acid value of this second resin was 27.3, the glass transition temperature 69°C and the functionality 2.0.

Instead of lithium benzoate, lithium stearate was employed.

### Example III

### Preparation of mixture A

140 parts w/w of acid-functional polyester resin (Uralac P3401™ from DSM Resins), 20 parts w/w of epoxidized linseed oil (LANKROFLEX®), 100 parts w/w of TiO₂, 3 parts w/w of Resiflow, 1.5 parts w/w of benzoin and 1.0 part w/w of Santowhite were mixed on a Buss extruder (200 rpm) at 125°C.

### Example IV

### Preparation of powder paint III

265.5 parts w/w of mixture A were mixed with 19.0 parts w/w of Uralac P 3400 and 21.0 parts w/w of a masterbatch of 20% sodium stearate in Uralac P 3400 on a laboratory extruder (PRISM) (200 rpm) at 125°C.

### Example V

### Preparation of powder paint IV

265.5 parts w/w of mixture A were mixed with 23.0 parts w/w of Uralac P 3400 and 17.0 parts w/w of a masterbatch of 20% lithium octanoate in Uralac P 3400 on a laboratory extruder (200 rpm) at 125°C.

### Example VI

### Preparation of powder paint V

265.5 parts w/w of mixture A were mixed with 25.0 parts w/w of Uralac P 3400 and 15.0 parts w/w of a masterbatch of 20% lithium laurate in Uralac P 3400 on a laboratory extruder (200 rpm) at 125°C.

After cooling, the product obtained in the foregoing examples was reduced, pulverized and screened to a particle size of max. 90 µm.

The powder paint coating composition was applied electrostatically to an earthed metal substrate and the applied coating cured for 10 minutes at 200°C.

Table 1 summarizes the characteristics of the powder coatings obtained from the powder paints of the foregoing examples.

**TABLE 1**

| Powder paint | I | II | III | IV | V |
|---|---|---|---|---|---|
| Impact resistance¹⁾(ip) | >160 | >160 | >160 | >160 | >160 |
| gloss 20°C²⁾ | 62 | 77 | 83 | 70 | 80 |
| gloss 60°C | 86 | 93 | 93 | 88 | 91 |
| flow³⁾ | moderate | moderate | good | good | good |
| overbake test⁴⁾1 hour, 200°C start L⁵⁾, 10 minutes, 200°C | 99.6 | 96.5 | 96.7 | 96.9 | 96.9 |
| start b, 10 minutes, 200°C | -0.3 | -0.2 | 0.8 | 0.4 | 0.9 |
| overbake (b) after lh, 200°C | 2.7 | 3.6 | 4.9 | 3.6 | 4.0 |

| | | | | | |
|---|---|---|---|---|---|
| ¹⁾ reverse impact test; ASTM-2794/69. The impact resistance is generally expressed as inch x pound. If no cracks are observed at 160 i.p., 160 i.p. is given as the result. An impact resistance of 160 i.p. is equal to 1.84 m.kg. | | | | | |
| ²⁾ ASTM D 523/70 | | | | | |
| ³⁾ visual | | | | | |
| ⁴⁾ in the overbake test (heat stability test) the test plate is heated at 200°C for one hour. Yellowing (b) is measured | | | | | |
| ⁵⁾ L is a value for whiteness. | | | | | |

As these examples show, the catalysts according to the invention in combination with polymer (i) and crosslinker (ii) result in powder coatings with a good impact resistance, good flow, good gloss, good initial colour and good thermal stability.

## Claims

1. Powder paint comprising a binder composition comprising (i) a polymer capable of reacting with epoxy groups and being selected from the group consisting of a polyester, a polyacrylate, a polyether, a polyurethane, a polycarbonate, a polybutadiene or a styrene-maleic acid anhydride copolymer, (ii) a crosslinker containing epoxy groups, wherein the crosslinker comprises at least one C₅-C₂₆ linear or branched aliphatic chain and the crosslinker has an epoxy functionality greater than 1, with the proviso that the epoxy groups are carried on the at least one aliphatic chain and a catalyst being a metal salt of a carboxylic acid or an alcohol or being a metal hydroxide excluding lithium alkanolate and lithium hydroxide as catalyst and wherein the acid is selected from decanoic acid, octanoic acid neodecanoic acid, stearic acid, lauric acid, linoleic acid, linolenic acid, decanedicarboxylic acid, benzoic acid or an acid obtainable by the Koch-reaction and the metal is selected from lithium, sodium, potassium, caesium, magnesium, calcium, copper or zinc.

2. Powder paint according to claim 1, characterized in that the metal hydroxide is sodium hydroxide, potassium hydroxide or caesium hydroxide.

3. Powder paint according to any one of claims 1-2, characterized in that the catalyst is sodium stearate, sodium neodecanoate, lithium stearate, sodium benzoate, lithium benzoate, sodium laurate, lithium laurate, sodium octanoate, lithium octanoate or lithium neodecanoate.

4. Two-component system for the preparation of a powder paint comprising a first component consisting of all or a large part of the polymer (i) and the crosslinker (ii), and a second component consisting substantially of a polymer (i) or another polymer and the catalyst according to any of the claims 1-3.

5. Powder coating on the basis of a powder paint according to any of the claims 1-3 or a two-component system according to claim 4.

6. Process for preparing a wholly or partially coated substrate by applying a powder coating according to claim 4 on a substrate, wherein (a) the acid groups- or anhydride groups-containing polymer with epoxy group-reactivity (i), the crosslinker (ii), the catalyst according to any one of claims 1-3 and, optionally, a quantity of additional curing agent are selected such that the curing reaction is substantially completed within 30 minutes at 200°C, and (b) curing the coating by heating it for a sufficient time long at a suitable temperature to obtain a cured coating, wherein the amount of epoxy-functional crosslinker (ii) is such that more than 20% of the crosslinking is obtained through that crosslinker.

7. Wholly or partially coated substrate, wherein the coating is obtained from a powder paint according to any of the claims 1-4.

## Patentansprüche

1. Pulverlack, umfassend eine Bindemittelzusammensetzung, umfassend (i) ein Polymer, das mit Epoxygruppen reagieren kann und aus der Gruppe ausgewählt ist, die aus einem Polyester, einem Polyacrylat, einem Polyether, einem Polyurethan, einem Polycarbonat, einem Polybutadien oder einem Styrol-Maleinsäureanhydrid-Copolymer besteht, (ii) ein Vernetzungsmittel, das Epoxygruppen enthält, wobei das Vernetzungsmittel mindestens eine lineare oder verzweigte aliphatische C₅-C₂₆-Kette umfaßt und das Vernetzungsmittel eine Epoxyfunktionalität von mehr als 1 hat, mit der Bedingung, daß die Epoxygruppen sich an der zumindest einen aliphatischen Kette befinden, und einen Katalysator, der ein Metallsalz einer Carbonsäure oder eines Alkohols ist oder ein Metallhydroxid ist, mit Ausnahme von Lithiumalkanolat und Lithiumhydroxid als Katalysator, und wobei die Säure aus Decansäure, Octansäure, Stearinsäure, Laurinsäure, Linolsäure, Linolensäure, Decandicarbonsäure, Benzoesäure oder einer Säure, die durch Koch-Reaktion erhältlich ist, ausgewählt ist und das Metall aus Lithium, Natrium, Kalium, Cäsium, Magnesium, Calcium, Kupfer oder Zink ausgewählt ist.

2. Pulverlack gemäß Anspruch 1, dadurch gekennzeichnet, daß das Metallhydroxid Natriumhydroxid, Kaliumhydroxid oder Cäsiumhydroxid ist.

3. Pulverlack gemäß einem der Ansprüche 1-2, dadurch gekennzeichnet, daß der Katalysator Natriumstearat, Natriumneodecanoat, Lithiumstearat, Natriumbenzoat, Lithiumbenzoat, Natriumlaurat, Lithiumlaurat, Natriumoctanoat, Lithiumoctanoat oder Lithiumneodecanoat ist.

4. Zwei-Komponenten-System zur Herstellung eines Pulverlacks, umfassend eine erste Komponente, bestehend aus dem gesamten oder einem Großteil des Polymers (i) und dem Vernetzungsmittel (ii), und eine zweite Komponente, im wesentlichen bestehend aus einem Polymer (i) oder einem anderen Polymer und dem Katalysator gemäß einem der Ansprüche 1-3.

5. Pulverbeschichtung auf Basis eines Pulverlacks gemäß einem der Ansprüche 1-3 oder eines Zwei-Komponenten-Systems gemäß Anspruch 4.

6. Verfahren zur Herstellung eines ganz oder teilweise beschichteten Substrats durch Aufbringen einer Pulverbeschichtung gemäß Anspruch 4 auf ein Substrat, wobei (a) das Säuregruppen oder Anhydridgruppen enthaltende Polymer mit Epoxygruppen-Reaktivität (i), das Vernetzungsmittel (ii), der Katalysator gemäß einem der Ansprüche 1-3 und gegebenenfalls eine Menge zusätzliches Härtungsmittel so ausgewählt werden, daß die Härtungsreaktion im wesentlichen innerhalb von 30 Minuten bei 200°C abgeschlossen ist, und (b) die Beschichtung durch Erhitzen während ausreichend langer Zeit bei geeigneter Temperatur gehärtet wird, um eine gehärtete Beschichtung zu erhalten, wobei die Menge Epoxy-funktionellen Vernetzungsmittels (ii) so groß ist, daß mehr als 20% der Vernetzung durch dieses Vernetzungsmittel erfolgt.

7. Ganz oder teilweise beschichtetes Substrat, wobei die Beschichtung von einem Pulverlack gemäß einem der Ansprüche 1-4 erhalten wird.

## Revendications

1. Peinture en poudre comprenant une composition de liant constituée de (i) un polymère capable de réagir avec les groupes époxy et qui est choisi parmi les polyesters, les polyacrylates, les polyéthers, les polyuréthannes, les polycarbonates, les polybutadiènes et les copolymères styrène-acide ou anhydride maléique, (ii) un agent réticulant contenant des groupes époxy, lequel contient au moins une chaîne aliphatique linéaire ou ramifiée en C5-C26 et a une fonctionnalité en groupes époxy supérieure à 1, sous réserve que les groupes époxy sont situés sur une chaîne aliphatique (il y en a au moins une) et un catalyseur consistant en un sel métallique d'un acide carboxylique ou d'un alcool ou en un hydroxyde métallique à l'exclusion d'un alcanoate de lithium et de l'hydroxyde de lithium, l'acide du catalyseur étant choisi parmi l'acide décanoïque, l'acide octanoique, l'acide stéarique, l'acide laurique, l'acide linoléique, l'acide linolénique, l'acide décanedicarboxylique, l'acide benzoique et les acides obtenus par une réaction de Koch, et le métal du catalyseur est choisi parmi le lithium, le sodium, le potassium, le caesium, le magnésium, le calcium, le cuivre et le zinc.

2. Peinture en poudre selon revendication 1, caractérisée en ce que l'hydroxyde métallique est l'hydroxyde de sodium, l'hydroxyde de potassium ou l'hydroxyde de caesium.

3. Peinture en poudre selon l'une quelconque des revendications 1 ou 2, caractérisée en ce que le catalyseur est le stéarate de sodium, le néodécanoate de sodium, le stéarate de lithium, le benzoate de sodium, le benzoate de lithium, le laurate de sodium, le laurate de lithium, l'octanoate de sodium, l'octanoate de lithium ou le néodécanoate de lithium.

4. Composition à deux composants pour la préparation d'une peinture en poudre, comprenant un premier composant consistant en la totalité ou une partie prépondérante du polymère (i) et de l'agent réticulant (ii), et un second composant consistant pratiquement en un polymère (i) ou un autre polymère et le catalyseur selon l'une quelconque des revendications 1 à 3.

5. Revêtement de poudre à base d'une peinture en poudre selon l'une quelconque des revendications 1 à 3 ou d'une composition à deux composants selon revendication 4.

6. Procédé pour former un support revêtu en totalité ou en partie par application d'un revêtement de poudre selon revendication 4 sur un support, dans lequel (a) on choisit le polymère à groupes acides ou à groupes anhydrides réactifs avec les groupes époxy (i), l'agent réticulant (ii), le catalyseur selon l'une quelconque des revendications 1 à 3 et, si on le désire, une certaine quantité d'un autre agent réticulant en sorte que la réaction de réticulation soit pratiquement complète en 30 minutes à 200°C, et (b) on réticule le revêtement par chauffage pendant une durée suffisante à une température appropriée, dans lequel la quantité de l'agent réticulant à fonctions époxy (ii) est telle qu'il provoque plus de 20 % de la réticulation.

7. Support revêtu en totalité ou en partie, dont le revêtement a été obtenu à partir d'une peinture en poudre sleon l'une quelconque des revendications 1 à 4.
